# EUROPEAN PATENT APPLICATION

(11) **EP 1 229 720 A2**
(43) Date of publication of application: **07.08.2002**
(21) Application number: 02250578.8
(22) Date of filing: 29.01.2002
(51) Int. Cl.: H04N 1/00, H04N 1/21

(54) **Digital camera and method of controlling same**

(30) Priority: 31.01.2001 JP 2001022600; 21.05.2001 JP 2001150776
(71) Applicant: Fuji Photo Film Co., Ltd., Kanagawa 250-0123 (JP)
(72) Inventor: Yoshida, Masanori, Asaka-shi, Saitama 351-8585 (JP); Inoue, Masashi, Asaka-shi, Saitama 351-8585 (JP)
(74) Representative: Stevens, Jason Paul

(57) **Abstract**

When a digital camera (30) capable of being set to implement the function of a card reader or camera is connected to a computer (40) via a USB, the computer is notified of the function to which the camera has been set. When the computer and the digital camera are connected by the USB, a device request is transmitted from the computer to the digital camera. Upon receiving the device request, the digital camera determines whether its operation at the time of the USB connection is that of a card reader or PC camera. Information indicating the result of the determination is incorporated in a device descriptor, which the digital camera then transmits to the computer. On the basis of the device descriptor, the computer detects the type of operation to which the digital camera has been set. The driver that supports this operation is loaded and the relevant commands are transmitted from the computer to the digital camera.

## Description

This invention relates to a digital camera (inclusive of a digital still camera, a digital movie camera and a personal digital assistant having a camera function), a method of controlling operation of the camera, peripheral equipment and a method of controlling operation of the peripheral equipment.

Many personal computers come equipped with a USB (Universal Serial Bus) terminal as standard equipment. Peripheral devices such as a printer, scanner and digital camera having a USB terminal can be connected to the USB terminal of such a personal computer. It is possible to transfer data between a personal computer and a peripheral device by utilizing a USB.

Further, a digital camera can be set not only to an imaging mode and playback mode but also to many other modes such as voice recording mode, a character input mode and a communication mode that allows the camera to communicate with a computer. Examples of the imaging mode are a still imaging mode set when a still image is recorded and a movie imaging mode set when a movie image is recorded. Examples of the communication mode are a mode in which, in accordance with a command from a computer, data that has been recorded on a recording medium of the digital camera is read or data is written to the recording medium, and a communication imaging mode in which image data obtained by image sensing in the digital camera is transmitted to a computer.

Mode often is set by a mode setting dial or the like. Specifically, the mode setting dial is rotated to set the desired mode in accordance with the position to which the dial is rotated. If there are many modes that can be set, however, there will be many locations to which the mode setting dial can be positioned. This makes it difficult for the operator to ascertain the position at which a desired mode can be set.

Also available are digital cameras in which a setting menu is displayed on the display screen of a display device provided on the digital camera and a mode is set by using the setting menu. With such a digital camera, however, the user must follow a procedure which includes first turning on the camera power supply, displaying the setting menu on the display screen and then selecting the mode. This procedure is fairly troublesome.

In a case where a peripheral device having a USB terminal is connected to the USB terminal of a personal computer, the personal computer sends the peripheral device a device request that requests the transmission of data indicating the kind of peripheral device that has been connected. When the peripheral device receives the device request, the peripheral device sends the personal computer a device descriptor containing data that indicates the function of the peripheral device. The personal computer receives the device descriptor and then sends the peripheral device a command conforming to the function indicated by the device descriptor. The peripheral device executes processing conforming to the command received.

Ordinarily, a peripheral device connected to a personal computer has a single function and therefore data representing this function is transmitted from the peripheral device to the personal computer.

An object of the present invention is to so arrange it that even if a peripheral device connected to a personal computer has two or more functions, data indicating a function appropriate for operation of the peripheral device can be transmitted to the personal computer.

Another object of the present invention is to so arrange it that the mode of a digital camera can be set in a comparatively simple manner.

According to a first aspect of the present invention, there is provided a digital camera connected to a computer by a USB, comprising: a function setting unit for setting the digital camera to function as an image sensing device or as a storage device; a first receiving unit for receiving, via the USB, a device request provided by the computer; and a transmitting unit, responsive to receipt of the device request by the first receiving unit, for sending the computer, via the USB, data representing the function that has been set by the function setting unit.

The first aspect of the present invention provides also an operation control method suited to the digital camera described above. Specifically, the invention provides a method of controlling operation of a digital camera connected to a computer by a USB, comprising the steps of: setting the digital camera to function as an image sensing device or as a storage device; receiving, via the USB, a device request provided by the computer; and in response to receipt of the device request, sending the computer, via the USB, data representing the function that has been set.

In accordance with the first aspect of the present invention, a digital camera has a function in which the camera operates as an image sensing device for sensing the image of a subject and obtaining image data representing the image of the subject, and a function in which the camera operates as a storage device for storing image data representing an image. Whether the digital camera functions as an image sensing device or storage device is set.

When the digital camera is connected to a computer by a USB, the computer transmits a device request to the digital camera via the USB. When the digital camera receives the device request, data representing the set function is transmitted to the computer via the USB.

When the computer receives data representing the function to which the digital camera has been set, a command conforming to the set function can be transmitted to the digital camera. The latter can be controlled by the computer in accordance with the function that has been set.

Even if the digital camera has the functions of an image sensing device and storage device, the computer can be notified of either of the set functions. The digital camera can be controlled by the computer in dependence upon the function set.

In a case where a command conforming to a set function is transmitted from the computer to the digital camera, the camera would be provided with a second receiving unit for receiving, via the USB, a command transmitted from the computer and corresponding to the function set by the function setting unit.

Further, if the function set by the function setting unit is that of an image sensing device, the transmitting unit would transmit a device descriptor, which includes data representing a USB camera, to the computer via the USB. If the function set by the function setting unit is that of a storage device, the transmitting unit would transmit a device descriptor, which includes data representing USB mass storage, to the computer via the USB.

According to a second aspect of the present invention, there is provided a peripheral device connected to a computer by a USB, the peripheral device being capable of performing either of functions of two types in accordance with a setting, the peripheral device comprising: a function setting unit for setting either one of the two types of functions; a first receiving unit for receiving, via the USB, a device request provided by the computer; and a transmitting unit, responsive to receipt of the device request by the first receiving unit, for transmitting, via the USB, data representing the function that has been set by the function setting unit.

The second aspect of the present invention provides also an operation control method suited to the peripheral device described above. Specifically, the invention provides a method of controlling operation of a peripheral device connected to a computer by a USB, the peripheral device being capable of performing either of functions of two types in accordance with a setting, the method comprising the steps of: setting either one of the two types of functions; receiving, via the USB, a device request provided by the computer; and in response to receipt of the device request, sending the computer, via the USB, data representing the function that has been set.

In accordance with the second aspect of the invention, even if a peripheral device has two types of functions, the computer can be notified of the set function via the USB. A command conforming to the function to which the peripheral device has been set can be transmitted from the computer to the peripheral device.

The operation of the peripheral device is controlled in accordance with the command transmitted from the computer via the USB.

According to a third aspect of the present invention, there is provided a digital camera capable of being set to an imaging mode and to an operating mode other than the imaging mode, comprising: an image sensing unit including a solid-state image sensing device responsive to setting of the imaging mode for sensing the image of a subject and outputting image data representing the image of the subject, and an imaging lens for forming the image of the subject on a photoreceptor surface of the solid-state image sensing device; a lens barrier movable between a closed position at which the imaging lens is covered from the front and an open position at which the imaging lens is opened from the front; a lens-barrier-position detecting circuit for detecting the position of the lens barrier; and a mode setting unit for setting the imaging mode in response to detection by the lens-barrier-position detecting circuit that the lens barrier is at the open position, and for setting the operating mode in response to detection by the lens-barrier-position detecting circuit that the lens barrier is at the closed position.

The third aspect of the present invention provides also an operation control method suited to the digital camera described above. Specifically, the invention provides a method of controlling operation of a digital camera capable of being set to an imaging mode and to an operating mode other than the imaging mode and having an image sensing unit including a solid-state image sensing device responsive to setting of the imaging mode for sensing the image of a subject and outputting image data representing the image of the subject, and an imaging lens for forming the image of the subject on a photoreceptor surface of the solid-state image sensing device, the method comprising the steps of: providing a lens barrier movable between a closed position at which the imaging lens is covered from the front and an open position at which the imaging lens is opened from the front; detecting the position of the lens barrier; and setting the imaging mode in response to detection that the lens barrier is at the open position, and setting the operating mode in response to detection that the lens barrier is at the closed position.

In accordance with the third aspect of the present invention, a digital camera is provided with a lens barrier capable of being moved between a closed position at which an imaging lens is covered from the front and an open position at which the imaging lens is opened from the front. The position of this barrier is detected. When the lens barrier is at the open position, the image of a subject can be sensed using the image sensing unit and therefore the camera is set to the imaging mode. When the lens barrier is at the closed position, the image of a subject cannot be sensed and therefore the camera is set to a different operating mode.

In accordance with the third aspect of the invention, the imaging mode or operating mode is set in accordance with the position of the lens barrier. Since an operation solely for setting the mode is unnecessary, the mode can be set comparatively simply in a manner that is transparent to the user.

The imaging mode is at least one of a still imaging mode for recording a still image and a movie imaging mode for recording a movie image, by way of example. The operating mode is at least one of a voice recording mode for recording voice data, which represents voice, on a recording medium, and a character recording mode for recording character data, which represents characters, on the recording medium.

The digital camera may further comprise a mode setting device for setting the imaging mode and the operating mode in accordance with the set position. In this case, the imaging-mode setting position and the operating-mode setting position of the mode setting device would be the same position.

Since the imaging-mode setting position and the operating-mode setting position of the mode setting device are the same, the setting positions of the mode setting device need not be increased in accordance with the modes. Thus the imaging mode or operating mode can be set without increasing positions that can be set by the mode setting device.

The digital camera may further comprise a communication circuit for communicating data with an external device, and a unit for controlling the mode setting unit so as to set the imaging mode or the operating mode in accordance with the setting of data communication by the communication circuit (e.g., in accordance with connection of a cable to the digital camera if communication is wired communication using a cable, or in accordance with setting of wireless communication if communication is wireless).

By setting data communication by means of the communication circuit, the setting of imaging mode or the setting of the operating mode can be carried out.

By way of example, the imaging mode is a communication imaging mode in which image data obtained by imaging in the image sensing unit is transmitted from the communication circuit to the external device, and the operating mode is at least one of a data read mode in which data that has been recorded on a recording medium is read and transmitted from the communication circuit to the external device and a data write mode in which image data that has been transmitted from the external device to the communication circuit is written to the recording medium.

Thus, an imaging mode relating to communication or an operating mode relating to communication can be set in dependence upon the setting of data communication by the communication circuit.

According to a fourth aspect of the present invention, there is provided a digital camera comprising: an image sensing unit for sensing the image of a subject using a solid-state image sensing device having an image-forming imaging lens provided in front of a photoreceptor surface, and outputting image data representing the image of the subject; a recording controller for recording image data, which has been output from the image sensing unit, on a recording medium; a communication circuit for transmitting image data, which has been output from the image sensing unit, to an external device in response to setting of a communication imaging mode, and executing, in response to setting of a communication read/write mode, processing for reading image data, which has been recorded on the recording medium, and transmitting the image data to the external device, or processing for receiving image data, which is transmitted from the external device, for the purpose of writing this image data to the recording medium; a lens barrier movable between a closed position at which the imaging lens is covered from the front and an open position at which the imaging lens is opened from the front; a lens-barrier-position detecting circuit for detecting the position of the lens barrier in accordance with setting of the communication circuit; and a mode setting unit for setting the communication imaging mode in response to detection by the lens-barrier-position detecting circuit that the lens barrier is at the open position, and for setting the communication read/write mode in response to detection by the lens-barrier-position detecting circuit that the lens barrier is at the closed position.

The fourth aspect of the present invention provides also an operation control method suited to the digital camera described above. Specifically, the invention provides a method of controlling operation of a digital camera having an image sensing unit for sensing the image of a subject using a solid-state image sensing device having an image-forming imaging lens provided in front of a photoreceptor surface, and outputting image data representing the image of the subject, a recording controller for recording image data, which has been output from the image sensing unit, on a recording medium, and a communication circuit for transmitting image data, which has been output from the image sensing unit, to an external device in response to setting of a communication imaging mode, and executing, in response to setting of a communication read/write mode, processing for reading image data, which has been recorded on the recording medium, and transmitting the image data to the external device, or processing for receiving image data, which is transmitted from the external device, for the purpose of writing this image data to the recording medium, the method comprising the steps of: providing a lens barrier movable between a closed position at which the imaging lens is covered from the front and an open position at which the imaging lens is opened from the front; detecting the position of the lens barrier in accordance with setting of the communication circuit; and setting the communication imaging mode in response to detection that the lens barrier is at the open position, and setting the communication read/write mode in response to detection that the lens barrier is at the closed position.

In accordance with the fourth aspect of the present invention, a digital camera is provided with a lens barrier capable of being moved between a closed position at which an imaging lens is covered from the front and an open position at which the imaging lens is opened from the front. The position of this barrier is detected in accordance with setting of a communication circuit. A communication imaging mode is set when the lens barrier is at the open position and a communication read/write mode is set when the lens barrier is at the closed position.

In accordance also with the fourth aspect of the invention, an operation solely for setting the mode is unnecessary. As a result, the mode can be set comparatively simply in a manner that is transparent to the user.

According to a fifth aspect of the present invention, there is provided a digital camera capable of being set to an imaging mode and to an operating mode other than the imaging mode, comprising: an image sensing unit including a solid-state image sensing device responsive to setting of the imaging mode for sensing the image of a subject and outputting image data representing the image of the subject, and an imaging lens for forming the image of the subject on a photoreceptor surface of the solid-state image sensing device; a first mode setting device for setting a mode in accordance with a setting position, wherein a position at which the imaging mode is set and a position at which the operating mode is set are the same; a lens barrier movable between a closed position at which the imaging lens is covered from the front and an open position at which the imaging lens is opened from the front; a lens-barrier-position detecting circuit for detecting the position of the lens barrier in accordance with positioning by the first mode setting device at the same setting position at which the imaging mode and operating mode are set; and a mode setting unit for setting the imaging mode in response to detection by the lens-barrier-position detecting circuit that the lens barrier is at the open position, and for setting the operating mode in response to detection by the lens-barrier-position detecting circuit that the lens barrier is at the closed position.

The fifth aspect of the present invention provides also an operation control method suited to the digital camera described above. Specifically, the invention provides a method of controlling operation of a digital camera capable of being set to an imaging mode and to an operating mode other than the imaging mode and having an image sensing unit including a solid-state image sensing device responsive to setting of the imaging mode for sensing the image of a subject and outputting image data representing the image of the subject, and an imaging lens for forming the image of the subject on a photoreceptor surface of the solid-state image sensing device, the method comprising the steps of: providing a mode setting device for setting a mode in accordance with a setting position, wherein a position at which the imaging mode is set and a position at which the operating mode is set are the same, and a lens barrier movable between a closed position at which the imaging lens is covered from the front and an open position at which the imaging lens is opened from the front; detecting the position of the lens barrier in accordance with positioning by the mode setting device at the same setting position at which the imaging mode and operating mode are set; and setting the imaging mode in response to detection that the lens barrier is at the open position, and setting the operating mode in response to detection that the lens barrier is at the closed position.

In accordance with the fifth aspect of the present invention, a digital camera is provided with a mode setting device (a first mode setting device) for setting a mode in accordance with a setting position, wherein a position at which the imaging mode is set and a position at which the operating mode is set are the same, and with a lens-barrier mechanism movable between a closed position at which the imaging lens is covered from the front and an open position at which the imaging lens is opened from the front. When the mode setting device is positioned at the same setting position at which the imaging mode and operating mode are set, the position of the lens barrier is detected. The imaging mode is set when the lens barrier is at the open position and the operating mode is set when the lens barrier is at the closed position.

In accordance with the fifth aspect of the present invention, the imaging-mode setting position and the operating-mode setting position in the mode setting device are the same. As a result, it is unnecessary to increase the setting positions of the mode setting device in accordance with the modes. Thus the imaging mode or operating mode can be set even though the position for setting the imaging mode and the position for setting the operating mode are the same in the mode setting device.

The digital camera may further comprise a second mode setting device for setting a first mode or a second mode in accordance with a setting position. In this case the first mode setting device is enabled in response to setting of the first mode by the second mode setting device and is disabled in response to setting of the second mode by the second mode setting device.

Other features and advantages of the present invention will be apparent from the following description taken in conjunction with the accompanying drawings, in which like reference characters designate the same or similar parts throughout the figures thereof, and in which:
Fig. 1 is a diagram showing a digital camera and a personal computer in a connected state;
Fig. 2 is a block diagram showing the electrical construction of a digital camera according to a first embodiment of the present invention;
Figs. 3 and 4 are diagrams illustrating examples of images displayed on a liquid crystal display screen of the digital camera according to the first embodiment;
Fig. 5 illustrates a procedure through which the personal computer and the digital camera communicate with each other according to the first embodiment;
Fig. 6 illustrates the content of a device descriptor according to the first embodiment;
Fig. 7 is a flowchart illustrating processing executed by the digital camera according to the first embodiment;
Fig. 8 is a flowchart illustrating processing executed by the personal computer according to the first embodiment;
Fig. 9 is a block diagram illustrating the electrical construction of videoconferencing system according to the first embodiment;
Fig. 10 shows an example of a window displayed on a display unit connected to a personal computer according to the first embodiment;
Fig. 11 illustrates the transition of the status of a USB connection between the personal computer and the digital camera according to the first embodiment;
Fig. 12 is a perspective view of a digital still camera according to a second embodiment of present invention;
Fig. 13 is a front view of the digital still camera according to the second embodiment;
Fig. 14 is a back view of the digital still camera according to the second embodiment;
Fig. 15 is a block diagram illustrating the electrical construction of the digital still camera according to the second embodiment;
Fig. 16 is a table showing modes set when a USB connection is made according to the second embodiment;
Fig. 17 is a flowchart illustrating processing executed by the digital still camera according to the second embodiment;
Fig. 18 is a table showing modes set when a USB connection is not made;
Fig. 19 is a flowchart illustrating processing executed by the digital still camera according to the second embodiment; and
Figs. 20 and 21 show examples of images displayed on the digital still camera according to the second embodiment.

Preferred embodiments of a digital camera according to the present invention will now be described in detail with reference to the drawings.

### (1) First Embodiment

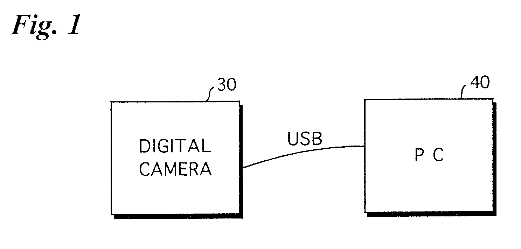

Fig. 1, which illustrates a first embodiment of the present invention, shows the configuration of a camera system.

The camera system comprises a digital camera 30 and a personal computer 40. The digital camera 30 and personal computer 40 each possess a USB terminal and are capable of communicating data with each other using a USB.

When the digital camera 30 has been connected to the personal computer 40 using a USB, the camera can operate as a memory-card reader or as a PC camera, which serves as an image input device, in accordance with a setting made by the user, as will be described later.

In this embodiment, when the digital camera 30 and personal computer 40 are connected by the USB, data representing a set function (the function of the memory-card reader or the function of the PC camera), i.e., a set operation, is transmitted from the digital camera 30 to the personal computer 40.

A command conforming to the received data is transmitted from the personal computer 40 to the digital camera 30. The digital camera 30 is controlled by the personal computer 40 in accordance with the function that has been set. This will become more apparent from the detailed description that follows.

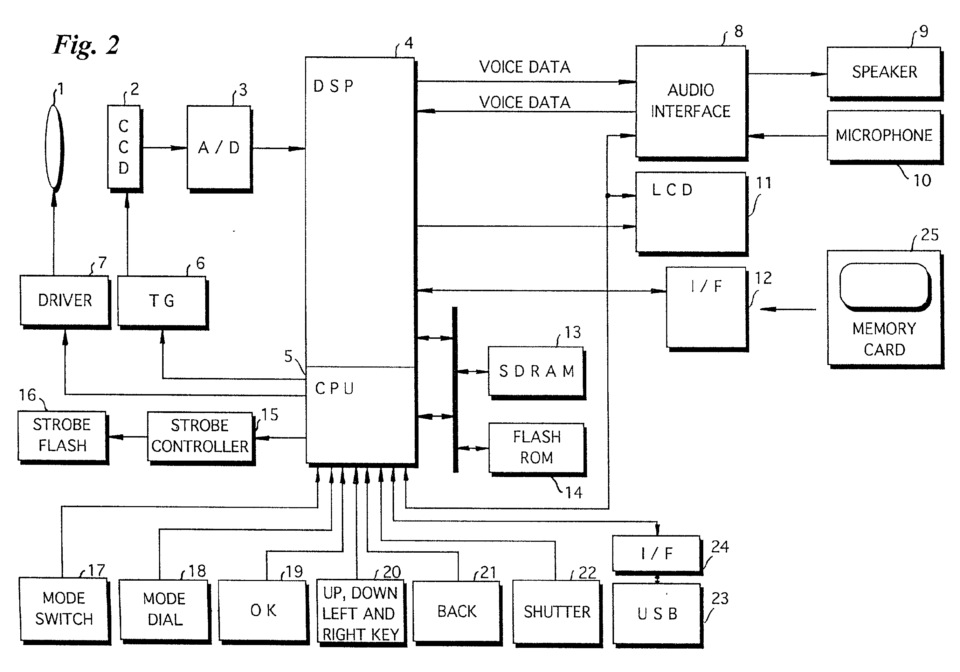

Fig. 2 is a block diagram illustrating the electrical construction of the digital camera 30.

The overall operation of the digital camera 30 is controlled by the CPU 5.

The digital camera 30 includes various switches such as a mode switch 17, a mode dial 18, an OK key 19, up, down left and right keys 20, a BACK key 21 and a shutter-release button 22, etc. The mode switch 17 sets a playback mode or an imaging mode. The mode dial 18 sets an imaging method such as continuous imaging, manual imaging and automatic imaging. The OK key 19 is pressed by the user when an OK command is to be applied. The up, down left and right keys 20 are for applying commands to move a cursor up, down, left or right, as will be described later. The BACK key 21 is pressed by the user when a command is to be cancelled, as will be described later. Signals representing commands from these switches are input to the CPU 5.

The digital camera is formed to have a USB terminal 23 connected to the CPU 5 via an interface 24. The digital camera 30 and personal computer 40 are connected using the USB terminal 23.

The digital camera includes a strobe flash unit 16 the light emission from which is controlled by a strobe controller 15.

The digital camera includes an SDRAM 13 and a flash ROM 14. The SDRAM 13 temporarily stores image data representing an image to be played back or an image obtained by sensing an image. The flash ROM 14 stores an operating program. The operating program that has been stored in the flash ROM 14 is read out and input to a DRAM (not shown) included in a digital signal processing circuit 4. The operating program is read out of the DRAM to operate the digital camera.

A driver 7 decides the amount of zoom of a zoom lens 1, whereby the zoom lens 1 is positioned. A timing generator 6 applies drive pulses and other pulses to a CCD 2. The latter is controlled in accordance with drive pulses applied.

If the imaging mode is set by the mode switch 17, the image of a subject is formed on the photoreceptor surface of the CCD 2 by the zoom lens 1. A video signal representing the image of the subject from the CCD 2 is input to an analog/digital converter circuit 3. The latter converts the analog video signal to digital image data and inputs this data to the digital signal processing circuit 4.

The digital signal processing circuit 4 subjects the entered image data to predetermined signal processing such as a gamma correction and color balance adjustment. Image data output from the digital signal processing circuit 4 is input to a liquid crystal display unit 11. Thus the sensed image of the subject is displayed on the display screen of the liquid crystal display unit 11.

If the shutter-release button 22 is pressed when a still-picture imaging mode has been set by the mode dial 18, image data obtained by image sensing is output from the digital signal processing circuit 4. The image data output from the digital signal processing circuit 4 is applied to a memory card 25 via an interface 12, whereby the data is recorded on the memory card.

If a movie imaging mode has been set, then image data is recorded on the memory card 25 for a fixed period of time during which the shutter-release button 22 is held depressed.

The digital camera according to this embodiment is further capable of recording and playing back voice. If voice data has been recorded on the memory card 25, then this data is input to the digital signal processing circuit 4 via the interface 12. The digital signal processing circuit 4 subjects this data to predetermined voice signal processing such as voice decompression. Voice data output from the digital signal processing circuit 4 is applied to a speaker 9 via an audio interface 8, voice represented by the voice data recorded on the memory card 25 is output.

If a voice recording mode is set (the voice recording mode is set by establishing the imaging mode by the mode switch 17 and establishing the voice recording mode by the mode dial 18), voice is captured by a microphone 10. Voice data representing voice is output from the microphone 10 and is input to the digital signal processing circuit 4 via the audio interface 8.

The digital signal processing circuit 4 subjects the voice data to voice compression such as MP3 [MPEG (Moving Picture Experts Group) - 1 Audio Layer 3]. The voice data that has undergone voice compression is applied to the memory card 25 via the interface 12, whereby the data is recorded on the memory card.

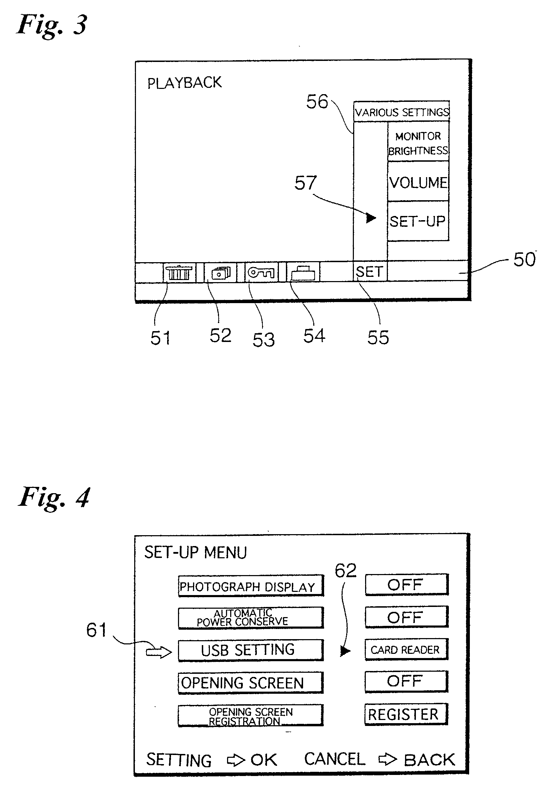

Figs. 3 and 4 illustrate examples of images displayed on the display screen of the liquid crystal display unit 11.

When the playback mode is set by the mode switch 17 and playback start-up processing is executed, as mentioned above', a transition is made to the playback mode. If the OK key 19 is pressed by the user, an icon menu 50 is displayed on the display screen of the liquid crystal display unit 11, as shown in Fig. 3.

When digital camera operations capable of being set by the user are divided into various types, the icon menu 50 displays a list of icons that represent these types of operations. Following icons are included in the icon menu 50.

### Trash can icon 51:

An image of a trash can is displayed. This icon is selected by the user when the user wishes to erase image data that has been recorded on the memory card 25. Such an erasure setting includes erasure of a single frame and erasure of all frames.

### Auto-play icon 52:

The image of a camera is displayed. This icon is selected by the user when the user wishes to set automatic playback. The user is capable of setting the time interval of automatic playback.

### Image protect icon 53:

The image of a key is displayed. This image is selected by the user when the user wishes to prevent the erroneous erasure of image data.

### Set-up icon 54:

Characters reading "SET" are displayed. This is an icon selected by the user when the user wishes to set the items of a menu for various settings which include a settings item specific to the playback mode and a settings item common to both the imaging mode and playback mode.

By pressing the left key or right key among the up, down left and right keys 20, the user changes the icon selected from the icon menu 50, thereby changing the designated state of the icon. For example, an icon that has been selected is displayed brighter than icons that have not been selected.

If the set-up icon 54 is selected from the icon menu 50, a menu 56 of various settings is displayed on the display screen. The various-settings menu 56 includes the following items:

### Monitor brightness item:

This item is selected by the user when setting the brightness of the liquid crystal display unit 11.

### Volume item:

This item is selected by the user when setting the volume of voice that is output from the speaker 9.

### SET-UP item:

This item is selected by the user when setting an item relating to operation of the digital still camera. If the SET-UP item is selected, a set-up menu (see Fig. 4) appears on the display screen. Various items are set by using the set-up menu that appears on the screen.

The monitor brightness item and the SET-UP item are items are not limited to the playback mode and imaging mode but are common to both. The volume item is an item specific to the playback mode.

If the up and down keys of the up, down left and right keys 20 are selected, a cursor 57 moves up or down depending upon which of these two keys is pressed.

If the BACK key 21 is pressed without pressing the OK key 19, the icon menu 50 and the menu items corresponding to the icons vanish from the display screen of the liquid crystal display unit 11.

If the OK key 19 is pressed, then an item that has been designated by the cursor 57 is selected.

If the SET-UP item is selected, then the set-up menu illustrated in Fig. 4 is displayed on the display screen of the liquid crystal display unit 11. If the brightness setting item is selected, a prescribed brightness setting menu is displayed. If the volume setting item is selected, then a prescribed volume setting menu is displayed.

As shown in Fig. 4, the set-up menu includes the following setting items, which are independent of the playback mode and imaging mode.

### Photograph display item:

This item is used to set whether or not an image obtained by sensing an image should be displayed on the display screen of the liquid crystal display unit 11. An on and off setting can be made. By turning this item on, the captured image is displayed on the display screen of the liquid crystal display unit 11. By turning this item off, the liquid crystal display unit 11 is turned off.

### Automatic power conserve item:

This item is for setting the digital camera in a power conserving state automatically. An on (include a set of time) and off setting can be made.

### USB item:

If the digital camera and the personal computer have been connected using a USB, this item is used to set what kind of device the digital camera should be recognized as. As mentioned above, the digital camera can be set to function as a memory card reader or as a PC camera.

### Opening screen item:

This item is used to turn on or off an image (referred to as an "opening screen") initially displayed on the liquid crystal display unit 11 when the power supply of the digital camera is turned on.

### Opening screen registration item:

This is an item used when an opening screen is registered. If a setting is made using the opening screen registration item when the playback mode is set and an image represented by image data that has been recorded on the memory card is being displayed on the display screen of the liquid crystal display unit 11, the image is registered as the opening screen. The image data representing the registered opening screen is stored in the flash ROM 14. By reading out image data that has been stored in the flash ROM 14 and applying the data to the liquid crystal display unit 11, the opening screen is displayed.

Cursors 61 and 62 are moved up or down in linked fashion along the items of the set-up menu in accordance with depression of the up and down keys. If the OK key 19 is pressed, the item being designated by the cursor 61 when the OK key 19 is pressed is set. Pressing the BACK key 21 cancels the setting of the item in the set-up menu.

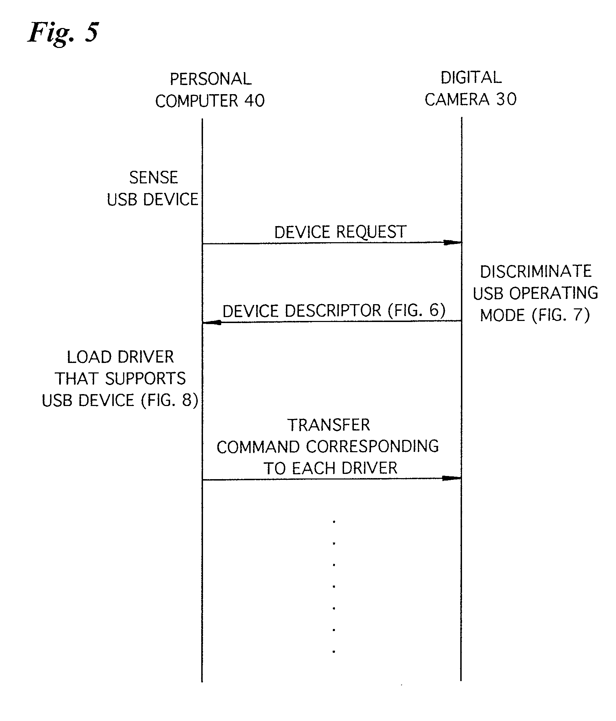

Fig. 5 illustrates the procedure of processing for communication performed between the digital camera 30 and the personal computer 40 in a case where the digital camera 30 and personal computer 40 have been connected by a USB.

If the personal computer 40 senses that a device of some kind has been connected by a USB as mentioned above, the personal computer 40 transmits a device request to the connected device (the digital camera 30 in this case) via the USB.

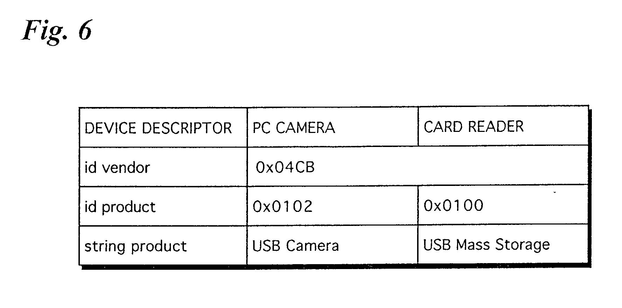

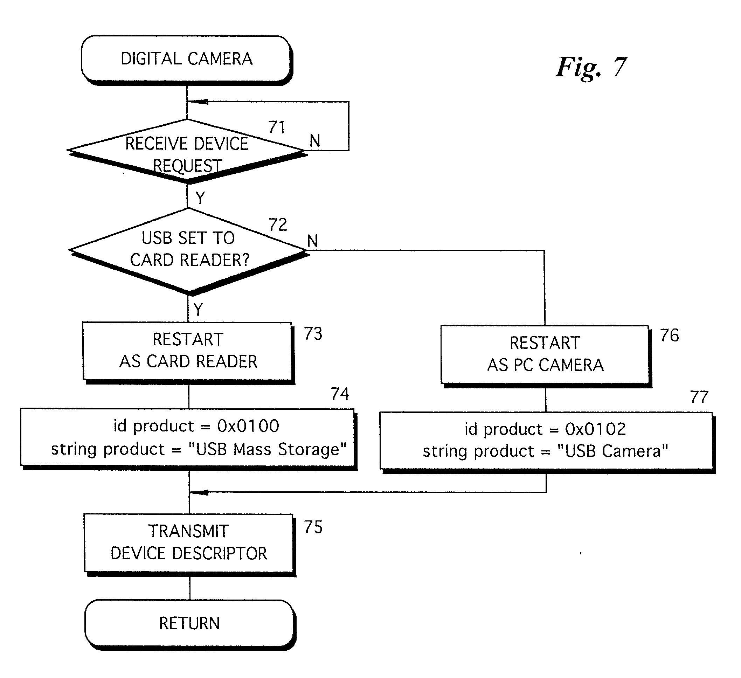

Upon receiving the device request, the digital camera 30 executes operating mode discrimination processing (see Fig. 7) to discriminate whether the USB setting is that of a memory card reader or PC camera. The operating mode discrimination processing will be described later. If the operating mode is discriminated in the digital camera 30, then the digital camera 30 sends the digital camera 30 a device descriptor (see Fig. 6) that contains data indicative of the operating mode.

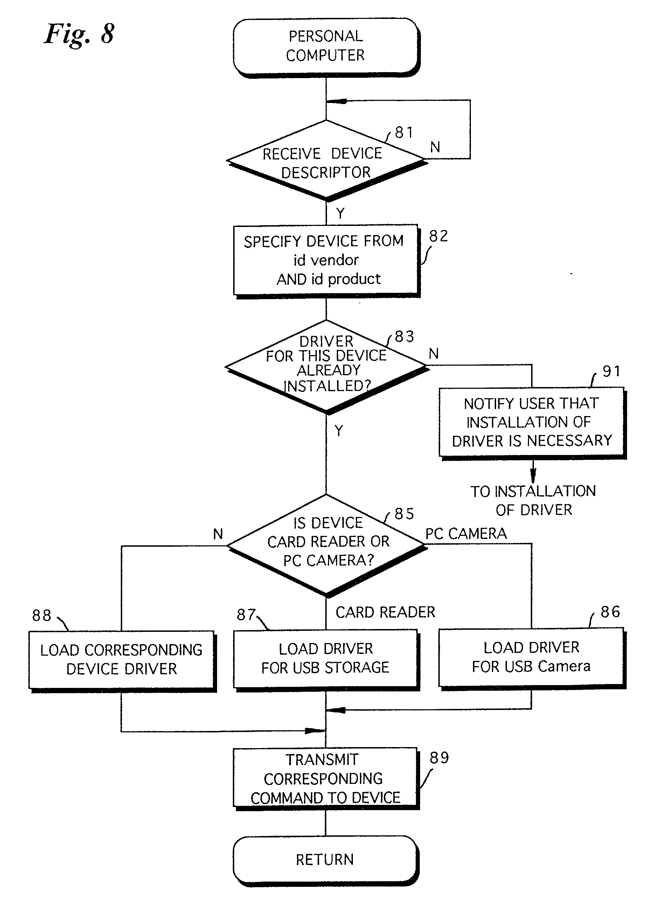

Upon receiving the device descriptor, the personal computer 40 detects, on the basis of the received device descriptor, the operating mode to which the digital camera 30 has been set. A driver conforming to the detected operating mode is loaded in the personal computer 40 (Fig. 8). Detection of the operating mode and processing for loading the driver will be described later in greater detail.

When a driver conforming to the detecting operating mode is loaded, a command corresponding to the detected operating mode is transmitted from the personal computer 40 to the digital camera 30.

A command transmitted from the digital camera 30 is received by the personal computer 40. When this occurs, the operation conforming to the received command is performed in the digital camera 30. Thus the personal computer 40 is capable of controlling the digital camera 30 in accordance with the mode that has been set.

Fig. 6 illustrates the content of the device descriptor transmitted from the digital camera 30 to the personal computer 40.

The device descriptor includes an id vendor, an id product and a string product. Though the device descriptor includes other information as well, this information is not especially related to the system of this embodiment and need not be described here.

The id vendor indicates information specific to the manufacturer. In this embodiment, information (Ox04CB) representing the name of the manufacturer of the digital camera 30 is set as the id vendor. The id product indicates information specific to the product (the digital camera 30). This item is set to "0x0102" if the USB has been set to PC camera and to "0x0100" if the USB has been set to card reader. String product indicates information specific to the model (the model of the digital camera 30). This item is set to "USB Mass Storage" if the USB has been set to card reader and to "USB Camera" if the USB has been set to PC camera.

Fig. 7 is a flowchart illustrating processing executed by the digital camera 30 to discriminate the USB operating mode.

When the device request transmitted from the personal computer 40 is received by the digital camera 30 ("YES" at step 71), as described above, it is determined whether the USB setting in the set-up menu is that of the card reader (step 72).

If the USB has been set to card reader ("YES" at step 72), then the digital camera 30 undergoes re-start processing (to be initially set as a card reader) (step 73) in order that the digital camera 30 will operate as a card reader. Furthermore, id product included in the device descriptor is set to "0x0100" so as to indicate card reader and string product is set to "USB Mass Storage" (step 74). The device descriptor is transmitted from the digital camera 30 to the personal computer 40 (step 75).

If the USB has not been set to card reader ("NO" at step 72), then it is construed that the USB has been set to the PC camera. The digital camera 30 undergoes re-start processing (to be initially set as a PC camera) (step 76) in order that the digital camera 30 will operate as a PC camera. Furthermore, id product included in the device descriptor is set to "0x0102" so as to indicate PC camera and string product is set to "USB Camera" (step 77). The device descriptor is transmitted from the digital camera 30 to the personal computer 40 (step 75).

On the basis of the id product and string product contained in the device descriptor, the personal computer 40 can ascertain whether the digital camera 30 will function as a card reader or PC camera.

Fig. 8 is a flowchart illustrating processing executed by the personal computer 40 to load a driver that supports a USB device.

When a device descriptor transmitted from the digital camera 30 is received ("YES" at step 81), the device that has been connected to the personal computer 40 by the USB is specified from the content of id product and string product contained in the device descriptor (step 82).

If the device is specified, it is determined whether the driver corresponding to the specified device has been installed in the personal computer 40 (step 83).

If the driver corresponding to the specified device has not been installed ("NO" at step 83), the user is notified of the fact that installation of the driver is necessary (step 91). For example, a display to this effect would be presented on the display screen of the display unit connected to the personal computer 40.

If the driver corresponding to the specified device has been installed ("YES" at step 83), then it is determined whether the device that has been connected to the personal computer 40 is a card reader or PC camera (i.e., whether the USB of the digital camera 30 has been set to card reader or to PC camera) (step 85).

If the USB has been set to PC camera (step 85), then the driver for the USB camera is loaded (i.e., driver software for the USB camera is loaded in the RAM of personal computer 40) (step 86). If the USB has been set to memory card (step 85), then the driver for USB storage is loaded (step 87). If the USB has been set to neither PC camera nor card reader ("NO" at step 85), then it is construed that another USB device has been connected and the corresponding driver is loaded (step 88).

If the driver corresponding to the device that has been connected to the personal computer 40, a command for controlling this device is transmitted to the digital camera 30 (step 89). Thus the device connected by the USB can be controlled by the personal computer 40.

In a case where the device connected to the personal computer 40 by the USB has multiple functions (the functions of a card reader and PC camera), the personal computer 40 can be notified of the function set. Control conforming to the set function can be performed by the personal computer 40.

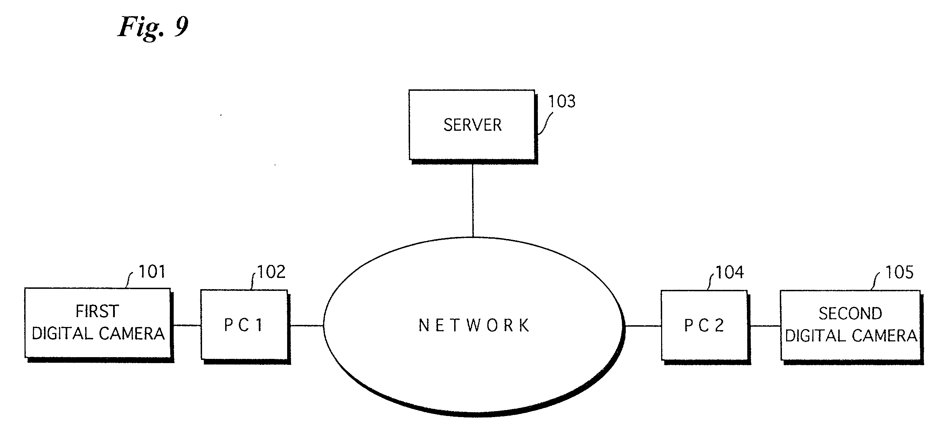

Fig. 9 illustrates the configuration of a network conferencing system.

Two sets of digital cameras and personal computers, each set having a digital camera and a personal computer connected by a USB in the manner described above, are provided. If these sets are connected to each other using a network so that they can communicate with each other, one party can converse with the other while the other's face is displayed.

A first digital camera 101 and a first personal computer 102 are connected by a USB, and a second digital camera 105 and a second personal computer 104 are connected by a USB. The first digital camera 101 and second digital camera 105 both have their USBs set to PC camera.

The first personal computer 102 and second personal computer 104 are connected to a network as by modems. A server 103 also is connected to the network.

A first user accesses the server 103 by the first personal computer 102. The image of the first user is sensed by the first digital camera 101 and image data representing the image of the first user is transmitted to the first personal computer 102. The image of the first user is displayed on the display screen of the display unit connected to the first personal computer 102. The image data representing the image of the first user is transmitted from the first personal computer 102 to the server 103 as well via the network.

A second user accesses the server 103 by the second personal computer 104. The image data representing the image of the first user is transmitted from the server 103 to the second personal computer 104. The image of the first user is displayed on the display screen of the display unit connected to the second personal computer 104.

Similarly, the image of the second user is sensed by the second digital camera 105 and image data representing the image of the second user is transmitted to the second personal computer 104. The image of the second user is displayed on the display screen of the display unit connected to the second personal computer 104. The image data representing the image of the second user is transmitted from the second personal computer 104 to the server 103 as well via the network.

The image data representing the image of the second user is transmitted from the server 103 to the first personal computer 102. The image of the second user is displayed on the display screen of the display unit connected to the first personal computer 102.

Thus, moving images of the first and second users are displayed on the display screens of the display units connected to the first and second personal computers 102 and 104, respectively. The first and second users can converse with each other while observing each other's image being displayed on the display screen of the display unit.

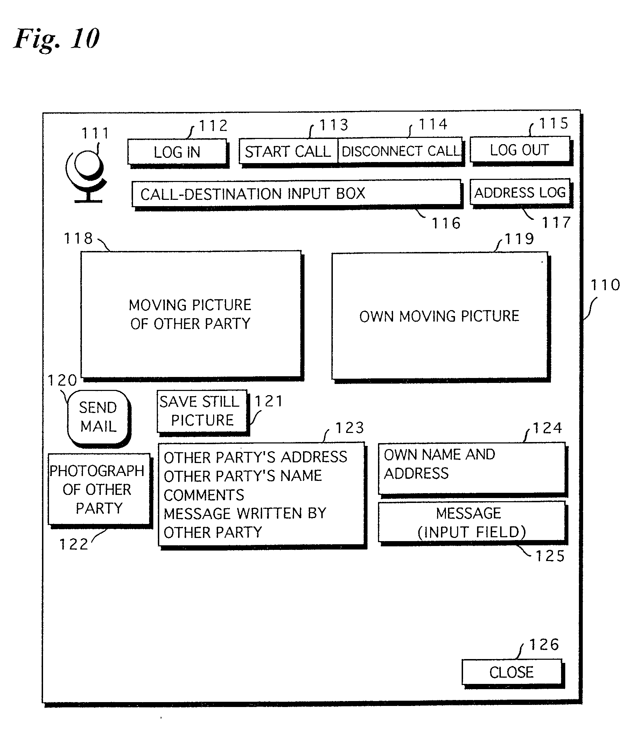

Fig. 10 illustrates a window 110 displayed on the display screens of the display units of the first and second personal computers 102 and 104 in this network conferencing system.

The window 110 includes the following areas:

### Indicator 111:

This indicates that the personal computer is logging in to the server 103.

### Log in area 112:

This area is clicked by the user to log in to the server 103.

### Call start area 113:

This area is clicked by the user to start a call (telephone conversation) with a specific user after the user has logged in to the server 103.

### Call disconnect area 114:

This area is clicked by the user to terminate the call.

### Log out area 115:

This area is clicked by the user to log out from the server 103.

### Call-destination input box 116:

This area is for entering the address (email address) of the user at the destination of the call.

### Address log area 117:

This area displays registered addresses by being clicked.

### First image display area 118:

This area displays the moving image of the user who is the other party in the conversation.

### Second image display area 119:

This area displays the moving image of the user on his or her own personal computer.

### Mail command area 120:

Clicking this area transmits electronic mail to the other party in the conversation.

### Still-image save area 121:

By clicking this area, image data representing the image of the other party being displayed in the first image display area 118 when this area is clicked is stored in the personal computer.

### Area 122 for displaying other party's photo:

This area displays a still picture of the other party to the conversation. If image data representing the still picture of the other party has not been stored in the personal computer, no image is displayed in this area.

### First information display area 123:

This area displays information concerning the other party. Examples of such information are the email address of the other party, the other party's name, comments, and messages written by the other party.

### Second information display area 124:

This area displays information concerning one's self. Examples are one's own email address and one's own name.

### Message input area 125:

This area is for inputting a message entered by the user.

### Close area 126:

This area is clicked by the user to close the window 110.

By displaying the window 110 on the display screens of the display units connected to respective ones of the first and second personal computers 102 and 104, a conversation can be carried out while the image of the other party is displayed in the first image display area 118 and one's own image is displayed in the second image display area 119. It goes without saying that voice is input to the first computer 102 and second personal computer 104 by microphones and that voice is transmitted to the second personal computer 104 and first personal computer 102 via the server 103 as voice data. Voice represented by the voice data thus transmitted is output from a speaker or the like.

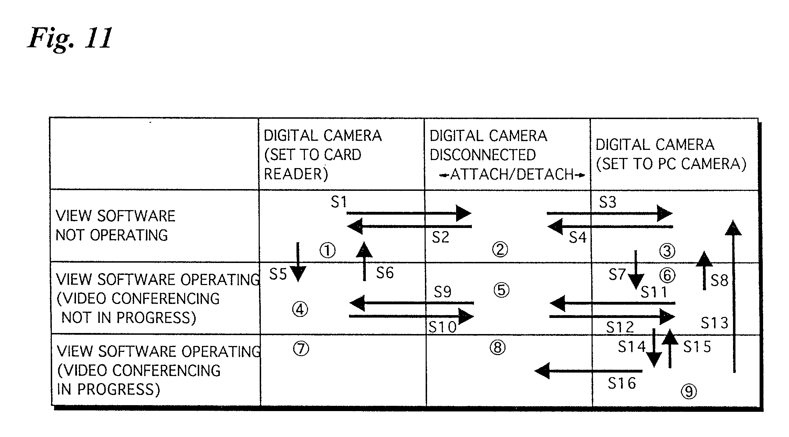

Fig. 11 illustrates transitions in cases where a digital camera and personal computer are connected and disconnected by a USB.

When the USB of the digital camera has been set to card reader in a case where view software is not operating in the personal computer (view software is software for causing an image represented by image data that has been recorded on a memory card loaded in the camera to be displayed on the display screen of the display unit of the digital camera in a case where the digital camera is made to operate as a memory card reader), then no particular operation is performed even if the USB is disconnected (processing S1).

If the USB is connected (processing S2) when the USB of the digital camera has been set to card reader in a case where view software is not running in the personal computer, then the view software is launched automatically.

If the USB is connected when the USB of the digital camera has been set to PC camera in a case where view software is not running in the personal computer (processing S3), then the view software is launched automatically and the above-described window 110 is displayed on the display screen of the display unit connected to the personal computer.

When the USB of the digital camera has been set to PC camera in a case where view software is not operating in the personal computer, then no particular operation is performed even if the USB is disconnected (processing S4).

When the USB of the digital camera has been set to card reader and, moreover, the digital camera and personal computer have been connected by the USB in a case where view software is not operating in the personal computer, the user performs a manual operation to launch the view software (processing S5).

When the USB of the digital camera has been set to card reader and, moreover, the digital camera and personal computer have been connected by the USB in a case where view software is operating in the personal computer, the user performs a manual operation to force the view software to quit (processing S6).

When the USB of the digital camera has been set to PC camera and, moreover, the digital camera and personal computer have been connected by the USB in a case where view software is not operating in the personal computer, the user performs a manual operation to launch the view software (processing S7). At this time the window 110 is displayed automatically.

When the USB of the digital camera has been set to PC camera and, moreover, the digital camera and personal computer have been connected by the USB in a case where view software is operating in the personal computer, the user performs a manual operation to force the view software to quit (processing S8).

If the USB connection is made when view software has been launched in the personal computer but video conferencing is not being carried out, then a display folder (image data representing the image displayed by the view software has been stored in this display folder) is updated if the USB has been set to card reader (processing S9).

Likewise, if the USB connection is severed when view software has been launched in the personal computer but video conferencing is not being carried out, the display folder is updated if the USB has been set to card reader (processing S10).

If the USB connection is made when view software has been launched in the personal computer but video conferencing is not being carried out, then no particular operation is performed if the USB has been set to PC camera (processing S11).

If the USB connection is severed when view software has been launched in the personal computer but video conferencing is not being carried out, the window 110 is opened automatically by the operating view software if the USB has been set to PC camera (processing S12).

When view software is operating in the personal computer and video conferencing is being carried out, the user performs a manual operation to force the view software to quit (processing S13).

When view software has been launched in the personal computer but video conferencing is not being carried out, a window opening command is applied by the user (processing S14) in order to open the window 110 when the USB has been set to PC camera.

When view software has been launched in the personal computer and video conferencing is being carried out, a window closing command is applied by the user (processing S15) in order to close the window 110 when the USB has been set to PC camera.

Disconnection of the USB is inhibited (processing S16) when view software has been launched in the personal computer and video conferencing is being carried out.

In any case, the status of the settings can be reported to the personal computer via the USB regardless of whether the digital camera is used as a memory card reader or PC camera. Control in a case where the digital camera is made to operate as a memory card reader and control in a case where the digital camera is made to operate as a PC camera can both be exercised by the personal computer.

### (2) Second Embodiment

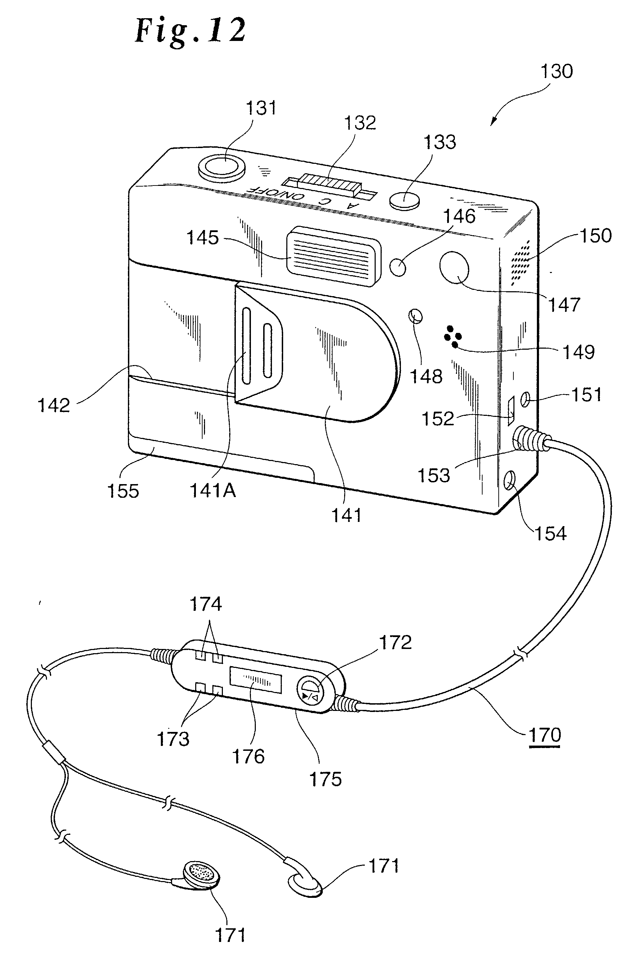

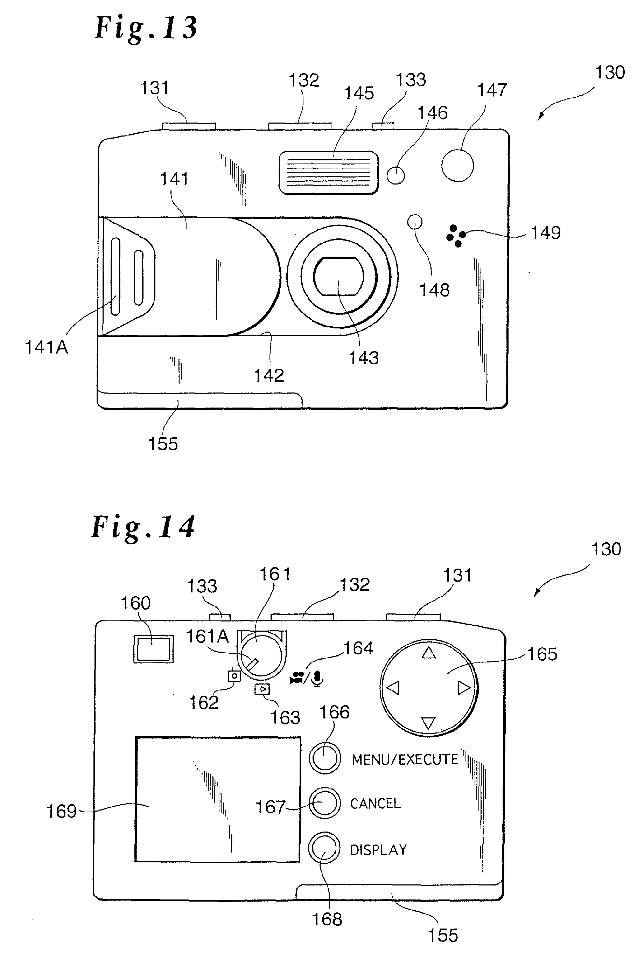

Fig. 12 is a perspective view of a digital still camera 130 capable of recording a movie in accordance with a second embodiment of the present invention, Fig. 13 is a front view of the digital still camera and Fig. 14 is a back view of the digital still camera.

The digital still camera 130 can be set to a large number of modes. Modes that can be set include a camera mode and a voice playback mode set in accordance with the position of a slide switch 132, as will be described later. Camera modes include a still recording mode set when a still picture is recorded; a movie recording mode (imaging mode) set when a movie image is recorded; a voice recording mode (operating mode) set when voice is recorded; an image playback mode set when an image is played back; a PC camera mode (communication imaging mode) set when image data captured by the digital still camera is transmitted to a computer; and a storage mode (communication read/write mode) in which data transmitted from a computer is written to a memory card that has been loaded in the digital still camera, and in which data that has been recorded on a memory card is read from the memory card and transmitted to a computer. The voice playback mode is set when voice is to be played back.

A shutter-release button 131, the slide switch (second mode setting device) 132 and a strobe button 133 are provided on the top of the digital still camera 130 on the left side thereof as viewed from the front of the camera. The shutter-release button 131 is of the two-stage-stroke type. When the still recording mode has been set, automatic exposure control and automatic focus control are carried out by pressing the shutter-release button 131 through the first stage of its stroke and an image is recorded by pressing the button 131 through the second stage of its stroke. When the voice recording mode has been set, the recording of sound is started by pressing the shutter-release button 131 through the first and second stages of its stroke. The recording of sound is halted by subsequently pressing the button 131 through the first stage of its stroke. As a result, the operating sound of the shutter-release button 131 is prevented from being recorded.

The slide switch 132 is movable freely to three positions, namely left, center and right positions as viewed from the front side of the camera. The slide switch 132 is locked when situated at the positions at the center and right side but is not locked when situated at the position on the left side. The power supply of the camera is turned on or off whenever the switch 132 is moved from the center position to the left position. The camera mode is set by placing the slide switch 132 at the center position and the voice playback mode is set by placing the slide switch 132 at the position on the right side.

The strobe button 133 is for changing over a strobe photography mode.

As shown in Fig. 13, an imaging lens 143 is disposed on the front side of the digital still camera 130 substantially at the center thereof. The front side of the digital still camera 130 is formed to have a lens barrier 141 for protecting the imaging lens 143. The lens barrier 141 is formed to have projections 141A elongated in the vertical direction. By engaging a finger with the projections 141A, the lens barrier 141 can be moved freely to the left and right along a groove 142 formed horizontally on the front side of the digital still camera 130. The imaging lens 143 is covered by placing the lens barrier 141 at a position (closed position) on the right side as seen from the front of the camera and is opened by placing the lens barrier 141 at a position (open position) on the left side.

The front side of the digital still camera 130 is formed to have a strobe flash unit 145, a strobe light control sensor 146 and a finder window 147 at the upper part of the camera. A self-timer lamp 148 and a microphone 149 are provided below the strobe light control sensor 146 and the finder window 147, respectively.

A cover 155 for covering a memory card and a battery compartment is formed on the bottom of the digital still camera 130.

The upper part of the digital still camera 130 on the right side thereof as viewed from the front is provided with a speaker 150, and the lower part is formed to have a line-out terminal 151, a USB (Universal Serial Bus) terminal 152, a control terminal 153 and a power-supply input terminal 154.

An earphone 170 having a remote controller 175 is connected to the control terminal 153. One end of the earphone 170 is formed to have a plug (not shown) for insertion into the control terminal 153, and the other end of the earphone 170 is provided with speakers 171. The remote controller 175 is provided with a playback/stop button 172 for applying a playback command and a stop command to the digital still camera 130, a forward/reverse button 173 for applying a fast-forward command and a fast-reverse command to the digital still camera 130, a volume adjustment button 174 and a liquid crystal display 176.

As shown primarily in Fig. 14, the back side of the digital still camera 130 is formed to have an optical viewfinder 160 at the upper-left corner. Provided to the right of the optical viewfinder 160 is a mode dial (a first mode setting device) 161 formed to have an indicator 161A. The mode dial 161 is freely rotatable. A camera mark 162 is formed at the lower left of the mode dial 161, a right-arrow mark 163 below the mode dial 161, and a TV camera / microphone mark 164 at the lower right of the mode dial 161. If the indicator 161A of the mode dial 161 is positioned so as to indicate the camera mark 162 when the camera mode has been set by slide switch 132, the still recording mode is set. If the indicator 161A of the mode dial 161 is positioned so as to indicate the right-arrow mark 163, the image playback mode is set. If the indicator 161A of the mode dial 161 is positioned so as to indicate the TV camera / microphone mark 164 and, moreover, the USB has been connected to the USB terminal 152, the movie recording mode is set when the lens barrier 141 is opened and the voice recording mode is set when the lens barrier 141 is closed.

Formed at the right of the mode dial 161 is an up, down, left, right button 165 on which up, down, left, right arrows are formed in a manner capable of being pressed. By pressing the left arrow when the image playback mode has been set, the image that is one frame prior to the image currently being played back is played back. Pressing the right arrow causes the image that is one frame ahead of the image currently being played back to be played back. Pressing the up arrow raises zoom magnification and pressing the down arrow lowers the zoom magnification, by way of example.

A liquid crystal display screen 169 is formed on the back side of the digital still camera 130 at the lower-left portion thereof. The liquid crystal display screen 169 displays an image obtained by photography, an image that has been played back, menus for making various settings, the number of still images that can be recorded, the length of time a movie can be recorded, whether or not the strobe will be flashed, a macro mode, recorded image quality and number of pixels, etc.

Provided on the right side of the liquid crystal display screen 169 are a menu / execute button 166 for applying a command to display a menu on the liquid crystal display screen 169 in order that various settings can be made, as well as an execute command, a cancel button 167 for canceling an applied command, and a display button 168 for applying a command that turns on and off the display on the liquid crystal display screen 169.

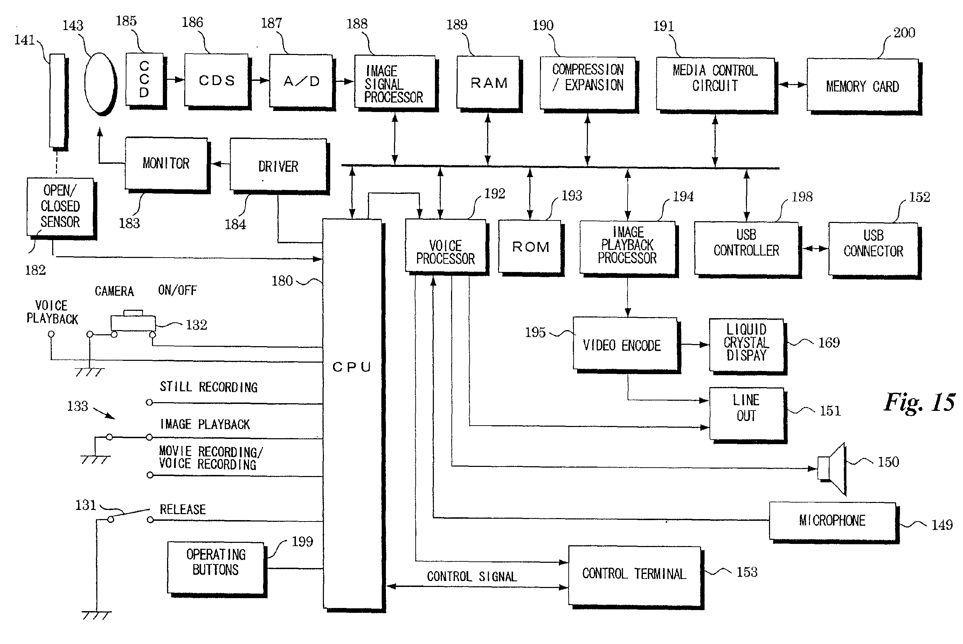

Fig. 15 is a block diagram illustrating the electrical construction of the digital still camera 130.

The overall operation of the digital still camera 130 is controlled by a CPU 180.

Signals from operating buttons 199 such as the slide switch 132, mode dial 161, shutter-release button 131 and up, down, left, right button 165 enter the CPU 180. Further, a control signal from the control terminal 153 is input to the CPU 180. The operating program of the digital still camera 130 and other data have been stored in a ROM 193.

A USB for communicating with a computer can be connected to the digital still camera 130, as mentioned earlier. To accomplish this, the digital still camera 130 includes a USB controller 198 connected to the USB connector 152.

The open/closed state of the lens barrier 141 is detected by an open/closed sensor 182. A signal indicating the open/closed state of the lens barrier 141 output from the open/closed sensor 182 is input to the CPU 180.

If the lens barrier 141 has been opened and the still recording mode or movie recording mode has been set, the image of the subject is formed on the photoreceptor surface of a CCD 185 by the imaging lens 143. Since the imaging lens 143 has a zoom function, the amount of zoom is controlled by a motor 183 under the control of a driver 184. It goes without saying that a single-focus lens may be employed.

A video signal representing the image of a subject is output from the CCD 185 and is subjected to correlated double sampling in a correlated double sampling circuit 186. The sampled signal is input to an analog/digital converter circuit 187. The video signal is converted to digital image data in the analog/digital converter circuit 187 and the data is applied to an image signal processing circuit 188. The latter subjects the digital image data to predetermined image processing such as synchronization processing, white balance adjustment, gamma correction and processing for generating a luminance / color difference signal.

The image data is applied to a video encoding circuit 195 via an image playback processing circuit 194. The video encoding circuit 195 converts the image data to an NTSC (National Television System Committee) video signal. The captured image of the subject is displayed on the liquid crystal display screen 169 by applying the NTSC video signal to a liquid crystal display unit 196. The image of the subject is displayed on the display screen of the display unit, which is connected to the digital still camera 130, by outputting the NTSC video signal to the exterior from line-output terminal 151.

When the still recording mode has been set, image data output from the image signal processing circuit 188 is applied to a RAM 189, where the data is stored temporarily, in response to depression of the shutter-release button 131 through the second stage of its stroke. Image data that has been read out of the RAM 189 is compressed in a compression/expansion circuit 190. The compressed image data is applied to and recorded on a memory card 200 via a media control circuit 191.

When the movie recording mode has been set, image data is applied to the RAM 189 while the shutter-release button 131 is being held depressed, as mentioned earlier. This image data is recorded in the RAM 189 temporarily. The image data is subsequently applied to and recorded on the memory card 200.

If the image playback mode is set, image data that has been recorded on the memory card 200 is read by the media control circuit 191 and expanded by the compression/expansion circuit 190. The expanded image data is subjected to playback processing in the image playback processing circuit 194. The image data played back is applied to the liquid crystal display unit 196 via the video encoding circuit 195, whereby the playback image is displayed.

If the voice recording mode is set, voice that has entered from the microphone 149 is converted to an analog voice signal and the analog voice signal is input to a voice processing circuit 192. The voice processing circuit 192 executes predetermined processing such as processing for converting the voice signal to digital voice data and voice compression processing such as MP3. The compressed voice data is applied to and recorded on the memory card 200 by the media control circuit 191.

If the voice playback mode is set, voice data that has been recorded on the memory card 200 is read by the media control circuit 191 and applied to the voice processing circuit 192. Expansion processing based upon MP3 or the like is executed by the voice processing circuit 192 and the latter also converts the expanded signal to an analog voice signal. By applying the analog voice signal to the speaker 150, voice is output.

If a USB that has been connected to a computer is connected to the USB terminal and the PC camera mode is set, image data obtained as set forth above is transmitted to the computer via the USB terminal 152. By transmitting the image data to the computer, image data can be recorded on the computer hard disk. By arranging it so that the computer communicates with another computer or the like, the digital still camera 130 can be made to function as a TV camera.

If a USB that has been connected to a computer is connected to the USB terminal and the storage mode is set, image data and voice data that has been read from a memory card as set forth above can be transmitted to a computer, and image data and voice data that is transmitted from a computer can be received by the digital still camera 130 and recorded on the memory card 200.

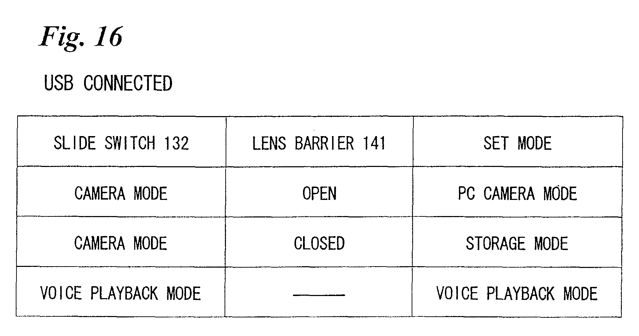

Fig. 16 is a table illustrating modes set by the digital still camera 130 when a USB has been connected to the digital still camera 130.

When a USB has been connected in a digital still camera 130 according to this embodiment, the set mode is decided in dependence upon the mode set by the slide switch 132 and the open/closed state of the lens barrier 141. In a case where the camera mode has been set by the slide switch 132, the digital still camera 130 is set to the PC camera mode if the lens barrier 141 is open (i.e., if the imaging lens 143 is uncovered) and the storage mode is set if the lens barrier 141 is closed (i.e., if the imaging lens 143 is covered). The PC camera mode and storage mode can be set even though the mode dial 161 does not have a position for setting the PC camera mode or a position for setting the storage mode.

When the voice playback mode has been set by the slide switch 132, the digital still camera 130 is set to the voice playback mode regardless of whether or not the lens barrier 141 is open.

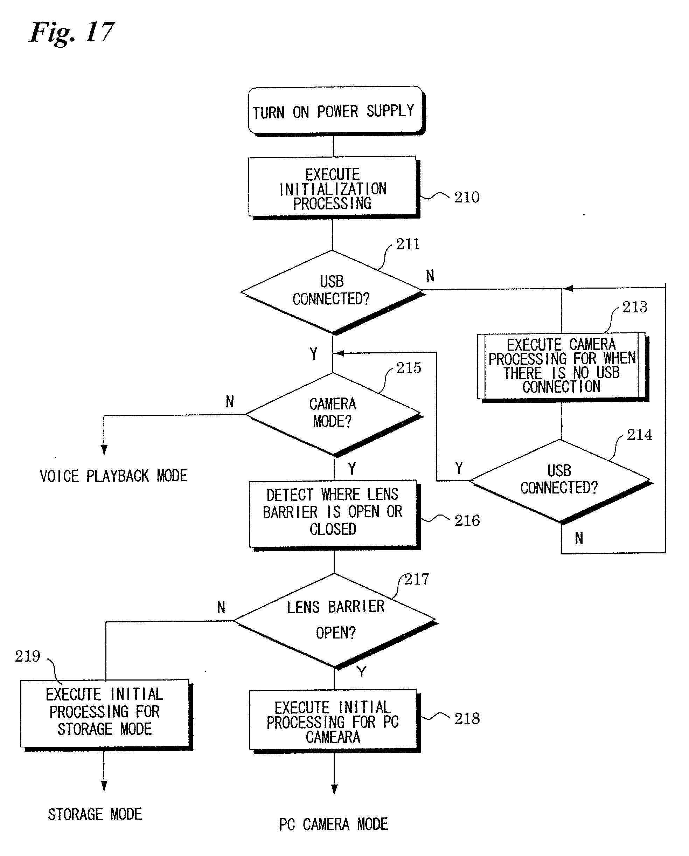

Fig. 17 is a flowchart primarily illustrating processing executed when a USB has been connected to the digital still camera 130.

If the power supply of the digital still camera 130 is turned on by the slide switch 132, camera initialization processing is executed (step 210). This processing includes processing for storing the operating program, which is contained in the ROM 193, in the RAM 189 and processing for initializing various set values.

It is determined whether a USB has been connected to the USB terminal 152 (step 211). If a USB has been connected to the USB terminal 152 ("YES" at step 211), whether or not the slide switch 132 has been set to the camera mode is checked (step 215). If the voice playback mode has been set ("NO" at step 215), then the digital still camera 130 is set to the voice playback mode and processing for playing back the voice data that has been recorded on the memory card 200 is executed.

If the digital still camera 130 has been set to the camera mode by the slide switch 132 ("YES" at step 215), then, on the basis of the output signal of open/closed sensor 182, whether or not the lens barrier 141 is open or closed is detected (step 216). If the lens barrier 141 is open ("YES" at step 217), then initial processing (power-supply processing, preliminary drive of the CCD 185, processing for determining whether a computer has been connected or not, processing for driving the imaging lens 143, etc.) for setting the camera to the PC camera mode is executed (step 218). Thereafter, the digital still camera 130 shifts to the PC camera mode so that image data captured by the CCD 185 can be transmitted to a computer. If the lens barrier 141 is closed ("NO" at step 217), initial processing for making a transition to the storage mode (processing for determining whether a computer has been connected) is executed (step 219). The camera then makes the transition to the storage mode.

If a USB has not been connected to the USB terminal 152 of the digital still camera 130 ("NO" at step 211), then a transition is made to camera processing executed when no USB has been connected (step 213). The details of this processing will be described later.

Whether or not a USB has been connected to the USB terminal 152 is checked cyclically (step 214) even in camera processing for when there is no USB connection. If a USB is connected ("YES" at step 214), then a transition is made to processing from step 215 onward.

In the above-described processing, the camera is set to the PC camera mode or storage mode in accordance with the open/closed state of the lens barrier 141 when the camera mode has been set by the slide switch 132. However, an arrangement may be adopted in which the camera is set to the PC camera mode or storage mode in accordance with the open/closed state of the lens barrier 141 when a USB has been connected, regardless of whether the camera mode has been set.

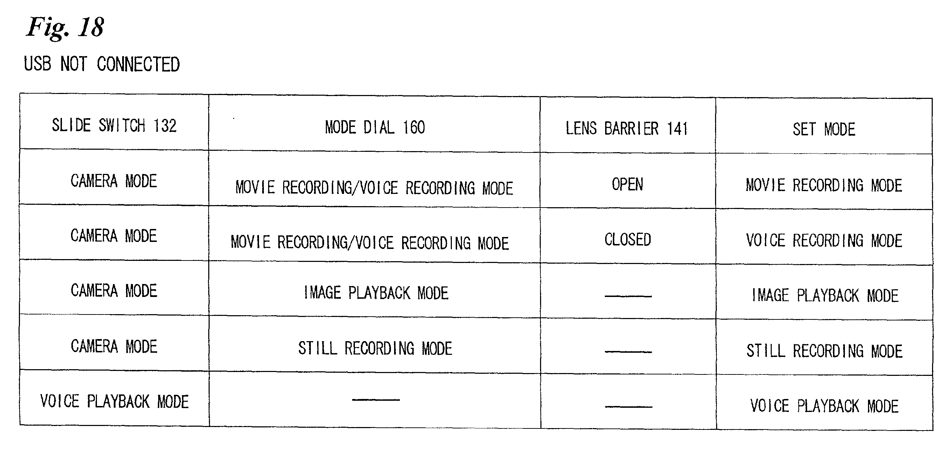

Fig. 18 is a table illustrating modes to which the digital still camera 130 is set when a USB has not been connected to the digital still camera 130.

In the digital still camera 130 according to this embodiment, the set mode is decided in dependence upon the mode set by the slide switch 132, the mode set by the mode dial 161 and the open/closed state of the lens barrier 141 when a USB has not been connected.

When the camera mode has been set by the slide switch 132 and the movie recording / voice recording mode has been set by the mode dial 161, the digital still camera 130 is set to the movie recording mode if the lens barrier 141 is open and to the voice recording mode if the lens barrier 141 is closed.

In a case where the camera mode has been set, the digital still camera 130 is set to the image playback mode, regardless of the open/closed state of the lens barrier 141, if the image playback mode has been set by the mode dial 161. If the still recording mode has been set by the mode dial 161, the camera is set to the still recording mode regardless of the open/closed state of the lens barrier 141.

In a case where the voice playback mode has been set by the slide switch 132, the camera is set to the voice playback mode regardless of the states of mode dial 161 and lens barrier 141.

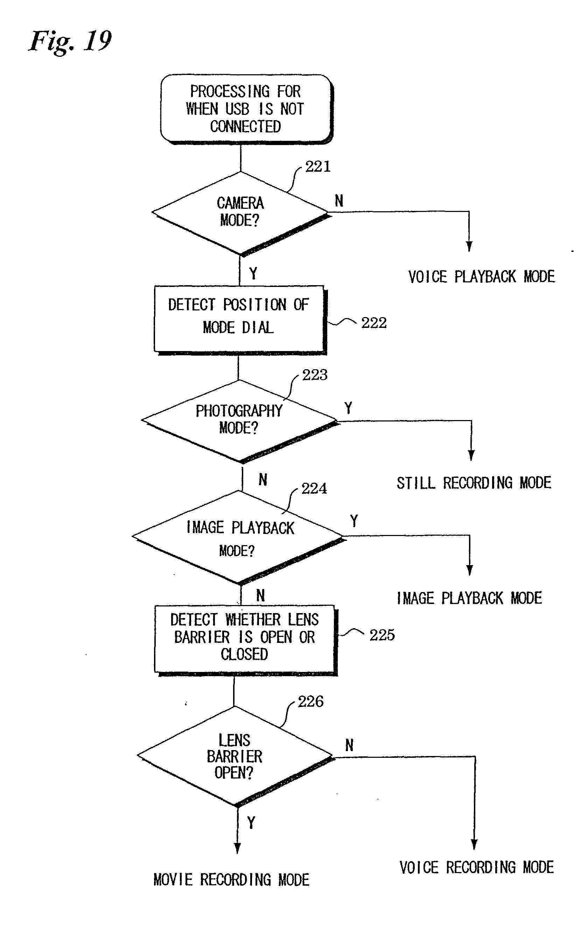

Fig. 19 is a flowchart illustrating camera processing (the processing of step 213 in Fig. 17) executed in the absence of a USB connection.

Whether or not the camera mode has been set by the slide switch 132 is checked (step 221). If the voice playback mode has been set ("NO" at step 221), then the digital still camera 130 is set to the voice playback mode. If the camera mode has been set ("YES" at step 221), then the position to which the mode dial 161 has been set is detected (step 222).

If the mode dial 161 has been placed at the position for setting the still recording mode, the digital still camera 130 is set to the still recording mode. If the mode dial 161 has been placed at the position for setting the playback mode, then the digital still camera 130 is set to the playback mode.

If the mode dial 161 has been placed at neither the position for setting the still recording mode nor the position for setting the image playback mode but at the position for setting the movie recording / voice recording mode ("NO" at steps 223 and 224), then the open/closed state of the lens barrier 141 is detected by the open/closed sensor 182 (step 225).

If the lens barrier 141 is open ("YES" at step 226), the image of the subject is capable of being sensed and therefore the movie recording mode is set. If the lens barrier 141 is closed ("NO" at step 226), then the image of a subject cannot be sensed and therefore the voice recording mode is set.

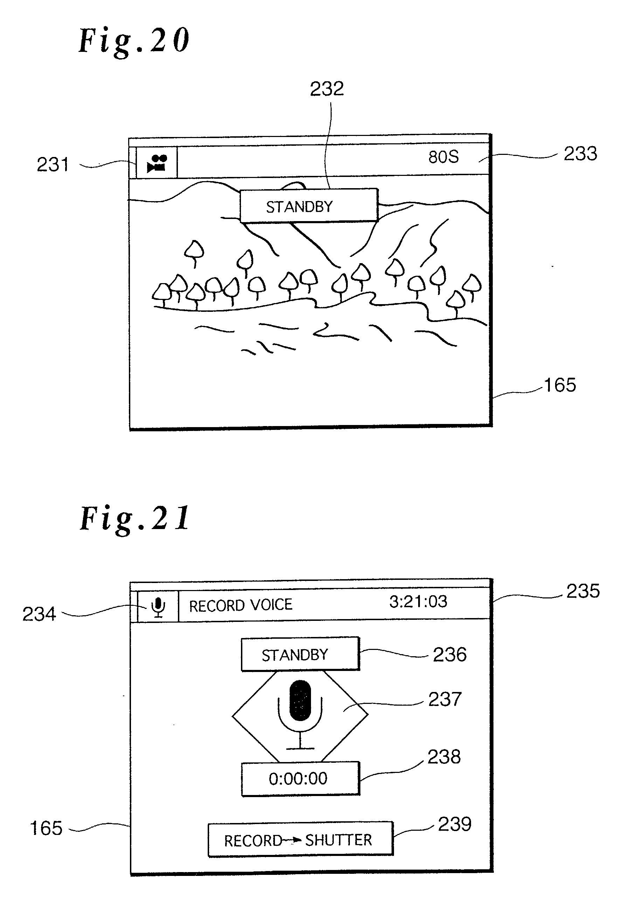

Fig. 20 illustrates an example of a standby image displayed on the liquid crystal display screen 169 in a case where the digital still camera 130 has been set to the movie recording mode.

Displayed on the standby image in the movie recording mode are a movie recording icon 231 appearing at the upper-left corner and indicating that the mode is the movie recording mode, time 233 appearing at the upper-right corner and indicating how long recording can be performed, and characters 232 appearing at the center and indicating standby. For example, recording can be performed for 80 seconds by a single shooting event. During the recording of image data on the memory card 200, characters reading "SAVING TO CARD IN PROGRESS" are displayed on the liquid crystal display screen 169.

Fig. 21 illustrates an example of a standby image displayed on the liquid crystal display screen 169 in a case where the digital still camera 130 has been set to the voice recording mode.

Displayed on the standby image in the voice recording mode are a voice recording icon 234 appearing at the upper-left corner and indicating that the mode is the voice recording mode, time 235 appearing at the upper-right corner and indicating how long recording can be performed, and characters 236 appearing at the center and indicating standby. Further, a microphone image 237 and recording time 238 are displayed at the center of the liquid crystal display screen 169. Operating guidance 239 is displayed at the bottom center of the screen.

Recording is started and stopped in dependence upon pressing of the shutter-release button 131. Characters reading "RECORDING IN PROGRESS" are displayed on the display screen 169 during recording.

When a USB has been connected to the digital still camera 130, the PC camera mode or storage mode is set based upon the open/closed state of the lens barrier 141. This means that the user need not consciously set the PC camera mode or storage mode. The movie recording mode and voice recording mode are set based upon the open/closed state of the lens barrier 141 even when a USB has not been connected to the digital still camera. Thus, even if the position at which the movie recording mode is set and the position at which the voice recording mode is set are made the same position in regard to the mode dial 161, either of these modes can be set. This means that the number of setting positions of the mode dial 161 need not be increased.

The above can be applied not only to the manually operated lens barrier 141 but also to an electronically driven lens barrier. In the case of an electronically driven lens barrier, the open/closed sensor 182 is dispensed with by using the CPU 180 to control the opening and closing of the lens barrier 141. Furthermore, in a case where a digital still camera is provided with an electronically driven lens barrier, the lens barrier is opened if the camera mode has been set by the slide switch 132 and, moreover, the still recording mode has been set. In this case, the PC camera mode is set if a USB has been connected and the still recording mode is attained if a USB has not been connected. Furthermore, when the image playback mode has been set by the mode dial, the camera is set to the storage mode if the USB has been connected and the image playback mode is established if the USB has not been connected.

An arrangement may be adopted in which, in a case where a USB has been connected, the PC camera mode is set, regardless of the state of the lens barrier itself, if the camera mode and still recording mode have been selected; and in a case where a USB has not been connected, the storage mode is set if the camera mode and image playback mode have been set. Of course, since changing the USB operating mode during a USB connection is undesirable in terms of control, a changeover in the USB operating mode would be inhibited if the camera is in the USB-connected state.

In the above embodiment, a case in which data is communicated using a USB has been described. However, an arrangement may be adopted in which the invention is applied to a communication interface such as an IEEE (Institute of Electrical and Electronic Engineers) 1394 interface.

In the above embodiment, the position at which the movie recording mode is set and the position at which the voice recording mode is set are made the same position. However, an arrangement may be adopted in which the position at which a mode relating to imaging (the still recording mode) is set and the position at which another mode (such as the image playback mode or, if input of characters is possible, a character input mode) is set are made the same position and either mode is set in accordance with the open/closed state of the lens barrier. In order to input characters to a digital still camera, a keypad for character entry or a pressure-sensitive window for character input on the liquid crystal display screen would be provided.

As many apparently widely different embodiments of the present invention can be made without departing from the scope thereof, it is to be understood that the invention is not limited to the specific embodiments thereof except as defined in the appended claims.

## Claims

1. A digital camera connected to a computer by a USB, comprising:
a function setting unit for setting the digital camera to function as an image sensing device or as a storage device;
a first receiving unit for receiving, via the USB, a device request provided by the computer; and
a transmitting unit, responsive to receipt of the device request by said first receiving unit, for sending the computer, via the USB, data representing the function that has been set by said function setting unit.

2. The digital camera according to claim 1, further comprising a second receiving unit for receiving, via the USB, a command transmitted from the computer and corresponding to the function set by said function setting unit.

3. The digital camera according to claim 1, **characterized in that** if the function set by said function setting unit is that of an image sensing device, then said transmitting unit transmits a device descriptor, which includes data representing a USB camera, to the computer via the USB, and if the function set by said function setting unit is that of a storage device, said transmitting unit transmits a device descriptor, which includes data representing USB mass storage, to the computer via the USB.

4. A peripheral device connected to a computer by a USB, the peripheral device being capable of performing either of functions of two types in accordance with a setting, said peripheral device comprising:
a function setting unit for setting either one of two types of functions;
a first receiving unit for receiving, via the USB, a device request provided by the computer; and
a transmitting unit, responsive to receipt of the device request by said first receiving unit, for sending the computer, via the USB, data representing the function that has been set by said function setting unit.

5. A method of controlling operation of a digital camera connected to a computer by a USB, comprising the steps of:
setting the digital camera to function as an image sensing device or as a storage device;
receiving, via the USB, a device request provided by the computer; and
in response to receipt of the device request, sending the computer, via the USB, data representing the function that has been set.

6. A method of controlling operation of a peripheral device connected to a computer by a USB, the peripheral device being capable of performing either of functions of two types in accordance with a setting, said method comprising the steps of:
setting either one of two types of functions;
receiving, via the USB, a device request provided by the computer; and
in response to receipt of the device request, sending the computer, via the USB, data representing the function that has been set.

7. A digital camera capable of being set to an imaging mode and to an operating mode other than the imaging mode, comprising:
an image sensing unit including a solid-state image sensing device responsive to setting of the imaging mode for sensing the image of a subject and outputting image data representing the image of the subject, and an imaging lens for forming the image of the subject on a photoreceptor surface of the solid-state image sensing device;
a lens barrier movable between a closed position at which the imaging lens is covered from the front and an open position at which the imaging lens is opened from the front;
a lens-barrier-position detecting circuit for detecting the position of said lens barrier; and
a mode setting unit for setting the imaging mode in response to detection by said lens-barrier-position detecting circuit that said lens barrier is at the open position, and for setting the operating mode in response to detection by said lens-barrier-position detecting circuit that said lens barrier is at the closed position.

8. The digital camera according to claim 7, wherein the imaging mode is at least one of a still imaging mode for recording a still image and a movie imaging mode for recording a movie image; and
the operating mode is at least one of a voice recording mode for recording voice data, which represents voice, on a recording medium, and a character recording mode for recording character data, which represents characters, on the recording medium.

9. The digital camera according to claim 7, further comprising a mode setting device for setting the imaging mode and the operating mode in accordance with a setting position;
wherein a setting position of said mode setting device for setting the imaging mode and a setting position of the mode setting device for setting the operating mode are the same position.

10. The digital camera according to claim 7, further comprising:
a communication circuit for communicating data with an external device; and
a unit for controlling said mode setting unit so as to set the imaging mode or the operating mode in accordance with the setting of data communication by said communication circuit.

11. The digital camera according to claim 10, wherein the imaging mode is a communication imaging mode in which image data obtained by imaging in said image sensing unit is transmitted from said communication circuit to the external device; and
the operating mode is at least one of a data read mode in which data that has been recorded on a recording medium is read and transmitted from said communication circuit to the external device and a data write mode in which image data that has been transmitted from the external device to said communication circuit is written to the recording medium.

12. A digital camera comprising:
an image sensing unit for sensing the image of a subject using a solid-state image sensing device having an image-forming imaging lens provided in front of a photoreceptor surface, and outputting image data representing the image of the subject;
a recording controller for recording image data, which has been output from said image sensing unit, on a recording medium;
a communication circuit for transmitting image data, which has been output from said image sensing unit, to an external device in response to setting of a communication imaging mode, and executing, in response to setting of a communication read/write mode, processing for reading image data, which has been recorded on the recording medium, and transmitting the read image data to the external device, or processing for receiving image data, which is transmitted from the external device, for the purpose of writing this image data to the recording medium;
a lens barrier movable between a closed position at which the imaging lens is covered from the front and an open position at which the imaging lens is opened from the front;
a lens-barrier-position detecting circuit for detecting the position of said lens barrier in accordance with setting of the communication circuit; and
a mode setting unit for setting the communication imaging mode in response to detection by said lens-barrier-position detecting circuit that said lens barrier is at the open position, and for setting the communication read/write mode in response to detection by said lens-barrier-position detecting circuit that said lens barrier is at the closed position.

13. A digital camera capable of being set to an imaging mode and to an operating mode other than the imaging mode, comprising:
an image sensing unit including a solid-state image sensing device responsive to setting of the imaging mode for sensing the image of a subject and outputting image data representing the image of the subject, and an imaging lens for forming the image of the subject on a photoreceptor surface of the solid-state image sensing device;
a first mode setting device for setting a mode in accordance with a setting position, wherein a position at which the imaging mode is set and a position at which the operating mode is set are the same;
a lens barrier movable between a closed position at which the imaging lens is covered from the front and an open position at which the imaging lens is opened from the front;
a lens-barrier-position detecting circuit for detecting the position of said lens barrier in accordance with positioning by said first mode setting device at the same setting position at which the imaging mode and operating mode are set; and
a mode setting unit for setting the imaging mode in response to detection by said lens-barrier-position detecting circuit that said lens barrier is at the open position, and for setting the operating mode in response to detection by said lens-barrier-position detecting circuit that said lens barrier is at the closed position.

14. The digital camera according to claim 13, further comprising a second mode setting device for setting a first mode or a second mode in accordance with a setting position;
said first mode setting device being enabled in response to setting of the first mode by said second mode setting device and disabled in response to setting of the second mode by said second mode setting device.

15. A method of controlling operation of a digital camera capable of being set to an imaging mode and to an operating mode other than the imaging mode and having an image sensing unit including a solid-state image sensing device responsive to setting of the imaging mode for sensing the image of a subject and outputting image data representing the image of the subject, and an imaging lens for forming the image of the subject on a photoreceptor surface of the solid-state image sensing device, the method comprising the steps of:
providing a lens barrier movable between a closed position at which the imaging lens is covered from the front and an open position at which the imaging lens is opened from the front;
detecting the position of the lens barrier; and
setting the imaging mode in response to detection that the lens barrier is at the open position, and setting the operating mode in response to detection that the lens barrier is at the closed position.

16. A method of controlling operation of a digital camera having an image sensing unit for sensing the image of a subject using a solid-state image sensing device having an image-forming imaging lens provided in front of a photoreceptor surface, and outputting image data representing the image of the subject, a recording controller for recording image data, which has been output from the image sensing unit, on a recording medium, and a communication circuit for transmitting image data, which has been output from the image sensing unit, to an external device in response to setting of a communication imaging mode, and executing, in response to setting of a communication read/write mode, processing for reading image data, which has been recorded on the recording medium, and transmitting the read image data to the external device, or processing for receiving image data, which is transmitted from the external device, for the purpose of writing this image data to the recording medium, said method comprising the steps of:
providing a lens barrier movable between a closed position at which the imaging lens is covered from the front and an open position at which the imaging lens is opened from the front;
detecting the position of the lens barrier in accordance with setting of the communication circuit; and
setting the communication imaging mode in response to detection that the lens barrier is at the open position, and setting the communication read/write mode in response to detection that the lens barrier is at the closed position.

17. A method of controlling operation of a digital camera capable of being set to an imaging mode and to an operating mode other than the imaging mode and having an image sensing unit including a solid-state image sensing device responsive to setting of the imaging mode for sensing the image of a subject and outputting image data representing the image of the subject, and an imaging lens for forming the image of the subject on a photoreceptor surface of the solid-state image sensing device, the method comprising the steps of:
providing a mode setting device for setting a mode in accordance with a setting position, wherein a position at which the imaging mode is set and a position at which the operating mode is set are the same, and a lens barrier movable between a closed position at which the imaging lens is covered from the front and an open position at which the imaging lens is opened from the front;
detecting the position of the lens barrier in accordance with positioning by the mode setting device at the same setting position at which the imaging mode and operating mode are set; and
setting the imaging mode in response to detection that the lens barrier is at the open position, and setting the operating mode in response to detection that the lens barrier is at the closed position.
